# EUROPEAN PATENT SPECIFICATION

(11) **EP 2 959 527 B1**
(45) Date of publication and mention of the grant of the patent: **03.01.2018**
(21) Application number: 14754090.0
(22) Date of filing: 20.02.2014
(51) Int. Cl.: H01M 8/02, D21H 25/00, D21H 13/50

(54) **NON-PUNCTURING FUEL CELL GAS DIFFUSION LAYER**
PUNKTIONSFREIE BRENNSTOFFZELLEN-GAS-DIFFUSIONSSCHICHT
COUCHE DE DIFFUSION DE GAZ POUR PILE À COMBUSTIBLE NON-PERFORANTE

(30) Priority: 21.02.2013 US 201361767384 P
(43) Date of publication of application: 30.12.2015
(73) Proprietor: Audi AG, 85045 Ingolstadt (DE)
(72) Inventor: MOTUPALLY, Sathya, Milford, CT 06460 (US)
(86) International application number: PCT/US2014/017378
(87) International publication number: WO 2014/130665

(56) References cited:
- EP-A1- 1 502 992
- WO-A1-2005/041331
- US-A1- 2003 104 267
- US-A1- 2007 037 021
- US-A1- 2007 147 877
- US-A1- 2008 143 061
- US-A1- 2010 129 534
- LIN, GUANGYU ET AL.: 'Effect of thickness and hydrophobic polymer content of the gas diffusion layer on electrode flooding level in a PEMFC' JOURNAL OF THE ELECTROCHEMICAL SOCIETY vol. 152, no. 10, 2005, pages A1942 - A1948, XP055292829

## Description

### Technical Field

A carbon fiber substrate of a fuel cell gas diffusion layer (GDL), or carbon fiber paper for making a GDL substrate, is bent so as to stress the fibers, causing loose-ended fibers near the surface to protrude from the surface of the gas diffusion layer or paper, following which protruding fibers are cleaned from the surface of the stressed GDL or paper by a shaving-like process.

### Background Art

In PEM (proton exchange membrane) fuel cell power plants, layers are disposed between the reactant gas flow fields and the cathode and anode catalyst layers which are in turn disposed on either side of the proton exchange membrane. These layers are commonly referred to as "gas diffusion layers", sometimes referred to as "current collectors". A principal function of the gas diffusion layer is to deliver the reactant gas (fuel or oxidant) in an even manner across the entire planform of the catalyst layers and PEM.

It has been found that unwoven carbon paper, made with carbon fibers, provide GDLs which exhibit excellent performance (volts per current density), with improved reactant gas mass transport. These superior characteristics have been noted in fuel cells utilizing solid reactant gas flow field plates and those utilizing porous reactant gas flow field plates.

The use of unwoven carbon paper made with carbon fibers for GDLs has, however, resulted in reduced durability of the fuel cells. It has been determined that loss of durability associated with carbon fiber paper GDLs is caused by the occurrence of pinholes in proton exchange membranes associated therewith, thereby allowing reactant gas crossover and consequent combustion. This not only results in failure of the afflicted cell, but due to resulting hot spots from the catalytic reaction of fuel and oxidant gases, more likely affects adjacent fuel cells as well.

The interleaving of ribs and grooves in the reactant flow field plates cause uneven stresses on the GDLs by the axial loading which is applied for minimizing contact resistance of the various layers in the fuel cell stack. Fibers incorporated into carbon paper GDLs get disentangled from the matrix, protrude from the surface of the GDL and, in turn, puncture the proton exchange membrane, causing gas crossover and mixture of the reactant gases. This causes heat concentration which may result in additional damage to the fuel cell stack.

In the general case this problem has been avoided by using a fine pore layer, often times called a "bilayer", between the GDL and the catalyst layers on the PEM. However, such a layer reduces mass transport and water permeability.

To avoid puncture of the PEM, Japanese patent publication 2004/281363 proposes using glass fiber substrates for GDLs. This requires heavy loading with electrically conductive matter, such as carbon or graphite particles.

Reduced puncture of PEMs by carbon fibers of the GDL is stated in US 7,144,476 to result from coating the GDLs with a high-specific-surface particulate carbon.

Loading or coating reduces reactant gas mass transport which reduces performance and response to load transients.

### Summary

A process of treating carbon fiber paper GDLs or carbon fiber paper stock used as a substrate to form GDLs employs an arcuate stressing (bending) of the carbon fiber paper or GDLs to force protrusion of fibers from the surface and cleaning the surface of protruded fibers by a shaving-like process. The arcuate stressing of the carbon fiber paper or GDL is in a manner to cause fibers to protrude from the particular surface thereof that is destined to be adjacent the catalyst layer of the fuel cell.

In one exemplary embodiment, carbon fiber GDLs, or carbon fiber paper stock used as a substrate for forming GDLs, are forced to tightly conform to a cylindrical drum or roller, which causes loose fibers to disentangle and protrude from the surface of the carbon fiber paper or GDL. Then a shaving operation, which may be performed with a razor-like implement or a nylon, or metal string, is used to cut off the protruded fibers, thus shaving the surface clean.

Other examples fall within the purview of the subject matter herein. For instance, other methods of deforming the carbon fiber paper to cause disentanglement and protrusion of fibers may be used in place of conforming the paper or GDL to a drum or roller. Shaving of the protruded fibers may be achieved with lasers, or another one of many shaving techniques known to the art.

Other variations will become more apparent in the light of the following detailed description of exemplary embodiments, as illustrated in the accompanying drawings.

### Brief Description of the Drawings

Fig. 1 is a stylized side elevation or plan view of one embodiment of the method herein.
Fig. 2 is a simplified, stylized, side elevation view illustrating an alternative embodiment.

### Mode(s) of Implementation

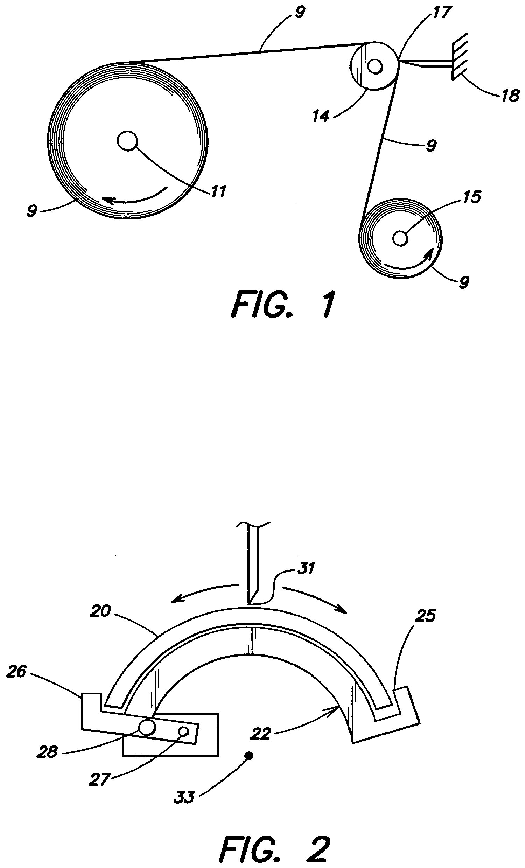

Referring to Fig. 1, a roll 9 of carbon fiber paper stock used for making GDLs, such as MITSUBISHI® U107, is rotated from one spindle 11 around a roller 14 to a second spindle 15. As the carbon fiber paper travels around the roller 14, the upper surface becomes convex. The stress applied to the paper causes loose fibers to disentangle and poke through the convex surface of the paper. The carbon fiber paper, as it passes around the roller, also passes beneath a chisel-like, razor sharp cutting edge 17 which is held by a stationary anchor 18. The razor-sharp edge 17 cuts the fibers that extend from the surface, thereby clearing the surface of any protruding fibers.

The roller 14 and the razor-sharp edge 17 will be as broad as the fiber carbon paper 9 (in a dimension perpendicular to the page in Fig. 1). Alternatively, a narrow razor-sharp edge 17 may travel back and forth across the paper 9.

When the carbon fiber cloth is thereafter used in GDLs within fuel cell stacks, there will be no protruding fibers that can poke holes through the fuel cell proton exchange membrane, and thus there will be no pin holes, no reactant gas crossover, and no combustion.

As an alternative to the apparatus shown in Fig. 1, instead of a razor-sharp cutting edge 17 extending across the entire surface of the carbon fiber paper passing over the roller 14, a stationary laser may provide a beam of sufficient energy across the width of the carbon fiber paper, along the same line as the razor-sharp edge 17. Another alternative may use a laser providing a beam that is rapidly scanned back and forth so as to contact the same line as the razor-sharp edge 17, sufficiently rapidly to cut off any protruding fibers.

The arrangement in Fig. 1 may be altered so that the spindles 11 and 15 are above the roller 14, with the carbon fiber paper passing under the roller 14. This would allow the severed fibers to fall away from the roll by gravity.

Instead of shaving the fibers while the fibers are still engaged in an elongated paper stock, used as a substrate to form GDLs, the methods herein may be practiced on formed GDLs. As illustrated in Fig. 2, the formed GDLs may be clipped onto an arcuate jig 22. The jig 22 may include a fixed clip 25 and a movable clip 26. The clip 26 may pivot around a point 27 and be held in place by a pin 28 when a GDL is mounted to be cleansed of protruding carbon fibers. A razor-sharp edge 31 is caused to be revolved about a point 33 which is the centroid of the radius of the surface of the jig 22 on which the GDL will rest when clipped thereto to cut off any protruding fibers.

## Claims

1. A method **characterized by**:
bending a sheet of fiber carbon paper so that a first surface thereof is convex to thereby disentangle some of the fibers that are prone to disentanglement and cause portions of the prone fibers to protrude from the first surface; and
shaving the portions of the prone fibers off the first surface of the sheet of fiber carbon paper.

2. A method according to claim 1 **characterized in that**:
the sheet of fiber carbon paper is advanced from a source roll to a secondary roll along a path having a roller that bonds the sheet as it alters the direction of the sheet.

3. Apparatus **characterized by**:
means for bending a sheet of fiber carbon paper so that a first surface thereof is convex to thereby disentangle some of the fibers that are prone to disentanglement and cause portions of the prone fibers to protrude from the first surface; and
means for shaving the portions of the prone fibers off the first surface of the sheet of fiber carbon paper.

4. Apparatus according to claim 3 further **characterized in that**:
the means for shaving comprises a razor-sharp edge.

5. Apparatus according to claim 3 further **characterized in that**:
the means for bending comprises a roller that alters the path of the sheet of fiber carbon paper as it advances from a first roll to a second roll.

## Patentansprüche

1. Verfahren **gekennzeichnet durch**:
Biegen eines Blattes Kohlefaserpapier derart, dass eine erste Oberfläche davon konvex ist, um dadurch einige der Fasern zu entwirren, die für eine Entwirrung anfällig sind, und zu bewirken, dass Abschnitte der anfälligen Fasern aus der ersten Oberfläche herausragen; und
Schaben der Abschnitte der anfälligen Fasern von der ersten Oberfläche des Blattes Kohlefaserpapier.

2. Verfahren nach Anspruch 1, **dadurch gekennzeichnet, dass**:
das Blatt Kohlefaserpapier von einer Quellrolle zu einer sekundären Rolle entlang eines Pfades vorgeschoben wird, der einen Roller aufweist, der das Blatt klebt, wenn er die Richtung des Blattes ändert.

3. Vorrichtung **gekennzeichnet durch**:
ein Mittel zum Biegen eines Blattes Kohlefaserpapier derart, dass eine erste Oberfläche davon konvex ist, um dadurch einige der Fasern zu entwirren, die für eine Entwirrung anfällig sind, und zu bewirken, dass Abschnitte der anfälligen Fasern aus der ersten Oberfläche herausragen; und
ein Mittel zum Schaben der Abschnitte der anfälligen Fasern von der ersten Oberfläche des Blattes Kohlefaserpapier.

4. Vorrichtung nach Anspruch 3, weiter **dadurch gekennzeichnet, dass**:
das Mittel zum Schaben eine messerscharfe Kante umfasst.

5. Vorrichtung nach Anspruch 3, weiter **dadurch gekennzeichnet, dass**:
das Mittel zum Biegen einen Roller umfasst, der den Pfad des Blattes Kohlefaserpapier ändert, wenn es von einer ersten Rolle zu einer zweiten Rolle vorgeschoben wird.

## Revendications

1. Procédé **caractérisé par** :
la flexion d'une feuille de papier en fibres de carbone de sorte qu'une première surface de celle-ci soit convexe pour ainsi démêler certaines des fibres qui sont sujettes au démêlage et provoquer la saillie de portions des fibres sujettes depuis la première surface ; et
le rasage des portions des fibres sujettes de la première surface de la feuille de papier en fibres de carbone.

2. Procédé selon la revendication 1 **caractérisé en ce que** :
la feuille de papier en fibres de carbone est avancée d'un rouleau source à un rouleau secondaire le long d'un trajet ayant un galet qui colle la feuille lorsqu'il modifie la direction de la feuille.

3. Appareil **caractérisé par** :
un moyen de flexion d'une feuille de papier en fibres de carbone de sorte qu'une première surface de celle-ci soit convexe pour ainsi démêler certaines des fibres qui sont sujettes au démêlage et provoquer la saillie de portions des fibres sujettes depuis la première surface ; et
un moyen de rasage des portions des fibres sujettes de la première surface de la feuille de papier en fibres de carbone.

4. Appareil selon la revendication 3 **caractérisé en outre en ce que** :
le moyen de rasage comprend un bord tranchant comme un rasoir.

5. Appareil selon la revendication 3 **caractérisé en outre en ce que** :
le moyen de flexion comprend un galet qui modifie le trajet de la feuille de papier en fibres de carbone lorsqu'elle avance d'un premier rouleau à un second rouleau.
